# EUROPEAN PATENT APPLICATION

(11) **EP 1 496 416 A1**
(43) Date of publication of application: **12.01.2005**
(21) Application number: 04016118.4
(22) Date of filing: 08.07.2004
(51) Int. Cl.: G05G 7/06, F16H 29/12, F16D 11/00

(54) **Adjusting mechanism for bowden cables**

(30) Priority: 08.07.2003 DE 10330719
(71) Applicant: FICO CABLES, LDA, 4471 Maia (PT)
(72) Inventor: da Silva Alves, Filipe, 4470-263 Vermoim - Maia (PT); Jorge Lopes, Leonel Jorge, 4470-263 Vermoim - Maia (PT)
(74) Representative: Heselberger, Johannes

(57) **Abstract**

The present invention relates to an adjusting mechanism 1 for the actuation of Bowden cables, which comprises one rotatably supported driving plate 10 and one rotatably supported engaging plate 20 for transmitting of a rotational motion to the driving plate 10, wherein during the rotation the engaging plate 20 is additionally pivotable around an axis, which is perpendicularly arranged to the rotational axis of the engaging plate 20 , to engage the driving plate 10 with the engaging plate 20.

## Description

### 1. Field of the invention

The present invention relates to an adjusting mechanism for a Bowden cable, for example for adjusting of a support structure in the backrest of a vehicle seat.

### 2. Background of the invention

In order to enhance the comfort of a vehicle seat, in particular of the backrest of a vehicle seat, different support structures are installed in these backrests. These support structures are mostly adapted to the back shape of the seated person in order to provide this person on the one hand a rest and on the other hand a sufficient support for the natural back shape. Such support structures are mostly predetermined in their shape and they only slightly give way based on their resilient properties. Other support structures are adaptable by means of adjusting mechanisms to different needs of the seated person.

By means of known adjusting mechanisms, on the one hand the arcing of the support structure, particularly in the area of the lumbar spine, can be adapted. A further function of these adjusting mechanisms consists in the shifting of the support structure in height parallel to the running direction of the backbone. In this manner, it is possible to optimally adapt the support structure of the backrest to seated persons having different size.

Different adjusting mechanisms for the backrest of a vehicle seat are disclosed in the US-A-4 805 481, the US-A-2 395 576 and in the US-A-4 143 905. The US-A-4 805 481 discloses a space consuming adjusting mechanism since the driving motion and the adjusting motion are transmitted via remotely of each other arranged pivot axis. A more compact arrangement is described in the two other US patents. In these arrangements, the adjusting mechanism is adjusted from an initial position in which no adjusting is possible, to an engaging position, in which an adjusting is possible, via a main pivot axis. Subsequently, an adjusting of the back of the seat is realized by means of the continuing rotation around the main pivot axis while the adjusting mechanism is still in the engaging position. As soon as the adjusting process is finished, i.e. the rotation around the main pivot axis ends, the adjusting mechanism is returned to the initial position by a slight opposite rotating around the main pivot axis compared to the previous rotation.

The transition from the initial position to the engaging position of the adjusting mechanism is realized by the coupling of a rotation around the main pivot axis to a rotation around different additional axis which have the same orientation. The rotation around the additional axis engages the engaging means of different construction with an outer adjusting element. The provision of different additional axis is related to high constructive efforts and thus also to high manufacturing efforts. Besides this manufacturing effort, the main axis and the additional axis have to be expensively serviced in order to guarantee a long lasting functioning of the adjusting mechanism. Additionally, the adjusting mechanisms disclosed in the above mentioned US patents consist of a plurality of components, thus the assembly of which is also very time-consuming. Additionally the assembly of such adjusting mechanism requires special tools and devices which also increases assembly time and costs. Further, the plurality of components leads to a high weight of the adjusting mechanisms which especially in vehicles negatively affects the fuel consumption.

It is therefore the technical problem of the present invention to provide an adjusting mechanism for a bowden cable, particularly for a support structure in a vehicle seat, which is constructively simply configured, which can be manufactured with limited effort and which requires less maintenance.

### 3. Summary of the invention

The underlying problem of the invention is solved by an adjusting mechanism for the actuation of Bowden cables, which comprises a rotatably supported driving plate and a rotatably supported engaging plate for transmitting of a rotational motion to the driving plate, wherein during the rotation the engaging plate is additionally pivotable around an axis, which is perpendicularly arranged to the rotational axis of the engaging plate, to engage the driving plate with the engaging plate.

According to the invention, the rotational motion of the engaging plate is superimposed by an additional pivoting motion. The pivoting motion serves for engaging the engaging plate with the driving plate. By the engagement of the elements it is possible to drive the driving plate by means of the engaging plate. The pivoting of the engaging plate can be achieved by a simple mechanics. Thereby, the adjusting mechanism can be cost efficiently be produced and is maintenance free.

Further, a ratchet-like function is provided by the selective engagement of engaging plate and driving plate, which allows to drive the driving plate further by means of repeated back and forth movements of the engaging plate. This ratchet-like function is made possible for both rotational directions, so that the driving plate is actuatable in both rotating directions, i.e. back and forth movements can be used for the releasing and also for the tightening of the Bowden cable.

In a first preferred embodiment, the engaging plate further comprises at least one first engaging means and at least one second engaging means, which are engageable with at least one first and at least one second engaging means of the driving plate, depending on the pivoting position of the engaging plate. The pivoting position of the engaging plate determines if the first or the second engaging means engages with the driving plate. By the pivoting it can be switched between two or more engagement conditions. In a first condition, the engaging plate is pivoted so that the first engaging means is in engagement with the driving plate. In a second condition, the engaging plate is pivoted so that the second engaging means is in engagement with the driving plate. Besides that, a third, neutral condition is possible in which neither the first nor the second engaging means is in engagement with the driving plate. Additionally, a condition could be possible in which both engaging means are in engagement with the driving plate.

In a further preferred embodiment, the engaging plate is pivotable, caused by the rotational motion of the engaging plate. The pivoting of the engaging plate is coupled with the rotational motion, which is introduced by the user of the adjusting mechanism, i.e. the rotational motion causes the pivoting motion of the engaging plate.

In a further preferred embodiment, the adjusting mechanism further comprises at least one guiding track, which converts the rotational motion of the engaging plate to the pivoting motion of the engaging plate. The engaging plate abuts the guiding track and the engaging plate is deflected by the guiding track and pivoted during a rotation.

Preferably, the adjusting mechanism further comprises a housing, wherein the at least one guiding track is formed within the housing. The guiding track is a part of the housing, so that no additional component is required. So, the manufacturing costs can be lowered.

Preferably, the first engaging means of the engaging plate comprises a first engaging tooth and the second engaging means of the engaging plate comprises a second engaging tooth, wherein in radial direction the first engaging means is further outwardly arranged onto the engaging plate, compared to the second engaging means. Preferably, the first engaging means is arranged onto the engaging plate in opposite to the second engaging means, wherein the pivoting axis of the engaging plate runs between the first and the second engaging means.

In a further preferred embodiment, the first engaging means of the driving plate comprises a plurality of teeth, which are sloped in a first tangential direction, wherein the teeth are circularly arranged to form an outer set of teeth. Furthermore preferred, the second engaging means of the driving plate comprises a plurality of teeth, which are sloped in a second tangential direction, wherein the teeth are circularly arranged, to form an inner set of teeth, wherein the radius of the outer set of teeth is larger than the radius of the inner set of teeth. The outer and the inner set of teeth form with the respective inner and outer tooth respectively a pair of teeth, which is able to transmit a force in one rotational direction but can glide over each other in the other rotational direction, so that no force is transmitted to the driving plate.

In a further preferred embodiment, the driving plate further comprises integrally formed spring elements to axially bias the driving plate in direction of the engaging plate. The biasing of the driving plate causes, on the one hand, that the engagement teeth securely latch with the sets of teeth and on the other hand provides that a back movement of the engaging plate is possible to the neutral position, wherein the respective teeth can better glide onto each other, without moving the driving plate.

Preferably, the adjusting mechanism further comprises a torsional spring, to automatically return the engaging plate back to its initial position after the actuation of the adjusting mechanism. Preferably, the middle position is the initial position of the lever between the actuation position of the adjusting mechanisms in the one or the other actuation direction.

In a further preferred embodiment, the engaging plate comprises at least one roll, which runs onto the at least one guiding track to generate the pivoting movement of the engaging plate. The roll rolls onto the guiding track, wherein a pivoting motion of the engaging plate without wear is provided.

In a further preferred embodiment of the adjusting mechanism, the main shaft extends through the complete adjusting mechanism, to commonly assemble the single components of the adjusting mechanism. The main shaft does not only provide the transmission of a rotational motion between particular elements but also for the assembly of the adjusting mechanism. The main shaft receives axial forces and fixes the adjusting mechanism together.

Preferably, the main shaft comprises recesses at both ends, to respectively latch with resilient latching elements. The single elements are assembled by simple latching. Particular mounting means or tools or not required.

Preferably, the problems are also solved by a method for the actuation of Bowden cables, comprising the following steps: (a) rotating of an engaging plate around a rotational axis, (b) pivoting the engaging plate around an axis running perpendicular to the rotating axis of the engaging plate, wherein (c) the engaging plate engages with a driving plate by the pivoting, and (d) after the engagement, transmitting of the rotational motion of the engaging plate to the driving plate.

In a first preferred embodiment either a first engaging means or a second engaging means of the engaging plate selectively engages with the driving plate, dependent on the rotational direction of the engaging plate.

Preferably the step of pivoting of the engaging plate is performed simultaneously with and caused by the step of the rotating of the engaging plate.

Further, it is preferred, that the pivoting direction of the engaging plate is reversed due to the reversing of the rotational direction of the engaging plate.

Preferably, the step of pivoting of the engaging plate is only performed during a certain section of the rotational motion of the engaging plate. During the other sections of the rotational motion, the engaging plate remains in its respective pivoting position.

### 4. Short description of the drawings

In the following, a preferred embodiment of the present invention is explained with reference to the drawings. It shows:
- Figure 1: a three-dimensional exploded view of the adjusting mechanism according to the invention;
- Figure 2: a three-dimensional view of the adjusting mechanism of figure 1;
- Figure 3: a partially sectional view of the adjusting mechanism of figure 1 in a view through the middle axis;
- Figure 4: the inner elements of the adjusting mechanism according to figure 1 in a three-dimensional view and in assembled condition, wherein the housing is not shown;
- Figure 5: the adjusting mechanism of figure 1 in a three-dimensional view, wherein the housing and parts of the inner elements are shown in a sectional view;
- Figure 6: a three-dimensional view of the housing of the adjusting mechanism of figure 1.

### 5. Detailed description of the preferred embodiments

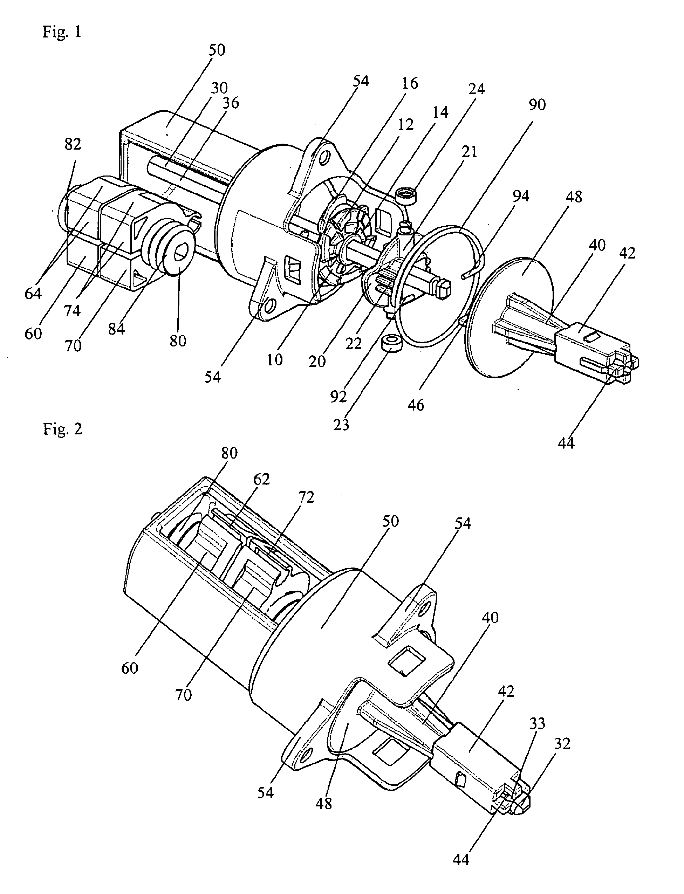

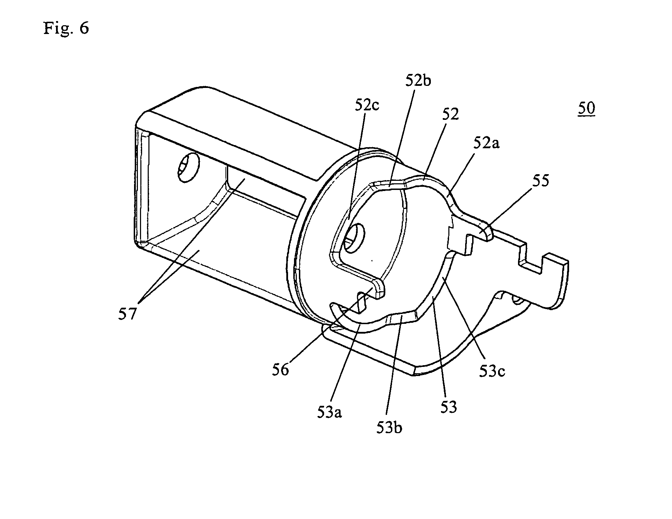

A preferred embodiment of the adjusting mechanism 1 according to the invention is explained in the following by means of figures 1 to 6.

In figure 1, an embodiment of the adjusting mechanism 1 according to the invention is shown in a three-dimensional exploded view. Figure 2 shows the same adjusting mechanism in assembled condition. The adjusting mechanism 1 essentially comprises of a housing 50, which substantially surrounds the inner elements and which protects them from outer influences and further serves for the assembly of the adjusting mechanism 1 for example at the frame of a backrest of a vehicle seat. Within the housing 50, a main shaft 30 is rotatably supported, which comprises a flattened side 36 to transmit a torque. The back portion of the main shaft 30 is inserted through an opening in a spindle 80 and thereby can transmit a torque to the spindle 80. The spindle 80 is divided on its outer side into two portions wherein the first portion is provided with left-handed threads and the second portion with right-handed threads. A first nut 60 is screwed onto the first portion having the left-handed threads, and a second nut 70 is screwed onto the second portion having the right-handed threads. During a rotation of the spindle 80, the first nut 60 and the second nut 70 move to each other or away from each other dependent on the rotational direction. The second nut 70 has a receptacle 72 for a cable end of a Bowden cable at its outer side. The first nut 60 has with a receptacle 62 for the cable sheath of the Bowden cable (not shown) at its outer side. During a rotation of the spindle 80, the first nut 60 is linearly displaced with respect to the second nut 70, so that the Bowden cable is tightened or released.

The first nut 60 and the second nut 70 comprise at their outer sides flat areas, which can glide on corresponding flat faces within housing 50. Thereby, a rotation of the first nut 60 and the second nut 70 within housing 50 is prevented.

The main shaft 30 is driven via a driving plate 10, which is rotatably rigid but displaceably arranged onto the main shaft 30. The driving plate 10 is an essentially circular disk, which comprises at its upper side an inner radially arranged set of teeth 14 and an outer radially arranged set of teeth 12. At its under side, it is integrally connected to spring elements 16. During a rotation of the driving plate 10 also main shaft 30 rotates, which is rotatably rigid connected to the same, wherein spindle 80 is rotated and the first nut 60 and the second nut 70 are displaced with respect to each other.

The driving plate 10 is actuated by an engaging plate 20. The engaging plate 20 comprises at its upper side an inner engaging tooth 28 and an outer engaging tooth 27, wherein the inner engaging tooth 28 can be engaged with the teeth of the inner set of teeth 14 and the outer engaging tooth 27 can be engaged with the teeth of the outer set of teeth 12. The engaging plate 20 is rotatably arranged within housing 50 and on the main shaft 30. Further the engaging plate 20 can perform pivoting motions around an axis perpendicular to the rotational axis of the main shaft 30. To this end, the engaging plate 20 is equipped with a first roll 23 and a second roll 24 at opposing outer sides, wherein the rotational axis of the rolls 23, 24 are perpendicularly oriented to the rotational axis of the main shaft 30 as well as to the pivoting axis of the engaging plate 20. The rolls 23 and 24 are rotatably mounted at the engaging plate 20 by means of first and second bearing pins 25 and 26, wherein the rolls 23, 24 are pushed onto the bearing pins 25, 26 and latch with them.

The adjustment mechanism 1 further comprises a driving shaft 40, at which an actuating element, like for example a hand lever or a rotating knob, is rotatably fixed connected. For the introduction of a rotational motion to the driving shaft 40, it is provided with a shaft connection 42 at its front end. In the shown embodiment, the shaft connection 42 comprises the shape of a prism having a square cross section. Further, latching elements are provided at its outer side, by means of which a hand lever or a rotating knob (not shown) can be fixed onto the shaft connection 42. The driving shaft 40 is hollow, so that the main shaft 30 can completely be inserted through it. The main shaft 30 can rotate with respect to the driving shaft 40. The driving shaft 40 further comprises a disk-like portion 45, which axially closes housing 50. At the disk-like portion 45, axially projecting engaging pieces 46 are connected, which, on the one hand, transmit a rotational motion to the engaging plate 20 and on the other hand actuate the spring ends 92 and 94 of a torsional spring 90. By rotating the driving shaft 40, also engaging plate 20 is rotated, as well as one of the spring ends 92 and 94 of the torsional spring 90 are taken along, wherein the torsional spring 90 is stressed.

The torsional spring 90 serves for the returning of the driving shaft 40 to its neutral position. To this end, the spring end 92 is actuated by the engagement piece 46 of the driving shaft 40, wherein the other spring end 94 is held by a nose 54 at the housing 50. During a rotation of the driving shaft 40 to the other direction, the spring end 94 of the spring 90 is actuated by an opposing engagement piece 46 of the driving shaft 40 and the spring end 92 is held by a nose 56 of housing 50. Therefore, the torsional spring 90 acts for returning of the driving shaft 40 to its neutral initial position after a motion in the one or the other direction, respectively.

The cable of a Bowden cable is tightened or released by the adjusting mechanism 1. To this end, a rotational motion is transmitted to the spindle 80, wherein this rotational motion is transmitted by the user via a hand lever or a rotating knob (not shown) to the driving shaft 40. As already disclosed, the spindle 80 is driven via the main shaft 30, which again is rotatably driven by the driving plate 10. The driving shaft 40 rotatably drives the engaging plate 20 but not the main shaft 30. The transmission of force between the engaging plate 20 and the driving plate 10 is done in the first direction via the inner engaging tooth 28 of the engaging plate 20 and the inner set of teeth 14 of driving plate 20. In the other direction, the transmission of force is done via the outer engaging tooth 27 and the outer set of teeth 12 of engaging plate 10. Depending on the rotational direction, the inner engaging tooth 28 or the outer engaging tooth 27 engages with the corresponding teeth of the driving plate 10. In the following, it is assumed that the first rotational direction corresponds to a rotation of the driving shaft 40 as shown in figure 1 in clockwise direction and the second rotational direction of the driving shaft 40 corresponds to the counter-clockwise direction.

As already mentioned, the engaging plate 20 is rotated by the driving shaft 40. A rotation of the engaging plate 20 simultaneously causes a pivoting of the engaging plate 20 with regard to the rotational axis, which is defined by the main shaft 30. To this end, the driving plate 20 is guided within the housing 50 so that the first roll 23 and the second roll 24 of the engaging plate 20 move on corresponding guiding tracks 52 and 53 within housing 50.

The guiding track 52 onto which the second roll 24 runs, comprises a low section 52c, a transition section 52b, and a high section 52a. The guiding track 53, onto which the first roll 23 runs, also comprises a low section 53a, a transition section 53b and a high section 53c. If the driving shaft is rotated in the first rotating direction, i.e. in clockwise direction, the second roll 24 moves out of the low section 52c, via the transition section 52b to the high section 52a. At the same time the first roll 53 moves from the high section 53c via the transition section 53b to the low section 53a. Thereby, the engaging plate 20 is pivoted, so that the outer engaging tooth 27 engages the outer set of teeth 12 of driving plate 10 and causes a rotation of driving plate 10 in clockwise direction. Thereby, also the main shaft 30 and the spindle 80 is rotated, whereby the first nut 60 is moved to the second nut 70. Simultaneously, the torsional spring 90 is biased in clockwise direction. If now the hand lever or the rotating knob is released, the torsional spring 90 returns the driving shaft 40 to its initial position in counter-clockwise direction.

If the driving shaft 40 is rotated in the second rotating direction, i.e. in counter-clockwise direction, the second roll 24 runs from the high section 52a, via the transition section 52b to the low section 52c of guiding track 52 and simultaneously, the first roll 23 runs from the low section 53a via the transition section 53b to the high section 53c of guiding track 53. Thereby, the engaging plate 20 is pivoted in opposite direction, so that the inner engaging tooth 28 engages with the inner set of teeth 14 of driving shaft 10 and the outer engaging tooth 27 of driving plate 10 disengages with the outer set of teeth 12. In this case, the driving plate 10 is driven in counter-clockwise direction, whereby again the shaft 30 and the spindle 80 is rotated in counter-clockwise direction. The first nut 60 moves away from second nut 70. At the same time, the torsional spring 90 is biased in counter-clockwise direction. During the releasing of the hand lever or the rotating knob, the torsional spring 90 again returns the driving shaft 40 back to its neutral position in clockwise direction.

By means of the described adjusting mechanism 1, a ratchet mechanism is provided which enables to tighten or to release the cables of the Bowden cable by repeated short rotational motions of a rotating knob or a hand lever. If, for example, for a complete adjustment of the Bowden cable a rotation of spindle 80 and thereby of main shaft 30 by 360° is needed, this motion can for example be generated by eight lever motions around 45°, respectively, which are introduced in the same direction to the driving shaft 40. After each motion, the lever is automatically returned to its rest position by the torsional spring 90. An adjustment of the Bowden cable in the other direction is done via short motions of the hand lever or the rotating knob to the other direction. Thereby, the hand lever or the rotating knob is automatically returned by the torsional spring 90 after each motion.

By means of the shown adjusting mechanism 1 a Bowden cable can be continuously adjusted by down or up moving of the hand lever (not shown) by the user, wherein the hand lever is mounted at the driving shaft 40. Thereby, first the engaging plate 20 is correspondingly pivoted, so that either the inner engaging tooth 28 or the outer engaging tooth 27 engages within the corresponding inner or outer set of teeth 12 or 14 of driving plate 10. After the engagement, the driving plate 10 is taken along in the respective direction and the main shaft 30 as well as the spindle 80 are rotated. Thereby, the first nut 60 is displaced by a certain amount with respect to the second nut 70. If this displacement by a singular actuation of the hand lever is not sufficient to provide the desired adjustment of the elements connected to the Bowden cable, the hand lever can be released, whereby it automatically returns by means of the spring effect of the torsional spring 90 to its initial position, wherein simultaneously the engaging plate 20 is pivoted backwardly and wherein the engagement teeth 28, 27 disengage from the driving plate 10. This means that the main shaft 30 does not move during a back movement of the hand lever. If the adjustment should be increased, the hand lever can again be actuated by the user, wherein again a positive connection between the engaging plate 20 and the driving plate 10 is established and subsequently the main shaft 30 is rotated. This actuation process can be performed by the user until the desired adjustment is achieved.

For an opposing adjustment, the hand lever is moved out of the initial position in the opposing direction once or repeatedly.

This movement of the hand lever around a certain angle only (preferably less than 180°) corresponds to a pump movement or a movement for the tightening of a nut by means of ratchet.

By the configuration of the guiding tracks 52 and 53 of housing 50, it can exactly be predetermined when the inner engaging tooth 28, respectively the outer engaging tooth 27, should latch with the teeth of the inner set of teeth 14 or the outer set of teeth 12. During an actuation, the engaging plate 20 performs simultaneously a rotation around the main rotational axis and a pivoting motion perpendicularly thereto, corresponding to the shape of the guiding tracks 52 and 53. The shape or course of the guiding tracks 52 and 53 can be selected, so that the engagement of the teeth 27 or 28 occurs at particular actuating angles, so that the adjusting mechanism 1 can be adapted to the requirements of the particular use case.

A further aspect of the invention is the easy assembly of the adjusting mechanism 1. The most important element is the main shaft 30, which extends through the complete adjusting mechanism 1. As discussed above, it serves for the transmission of the torque from the driving plate 10 to the spindle 80. Besides that it fulfills the task of guiding, of supporting the single elements of the adjusting mechanism 1 and of holding the mechanism 1 together. The rotational axis of main shaft 30 forms the main rotational axis of the adjusting mechanism 1. The spindle 80, the driving plate 10, the engaging plate 20 as well as the driving shaft 40 rotates around this main rotational axis.

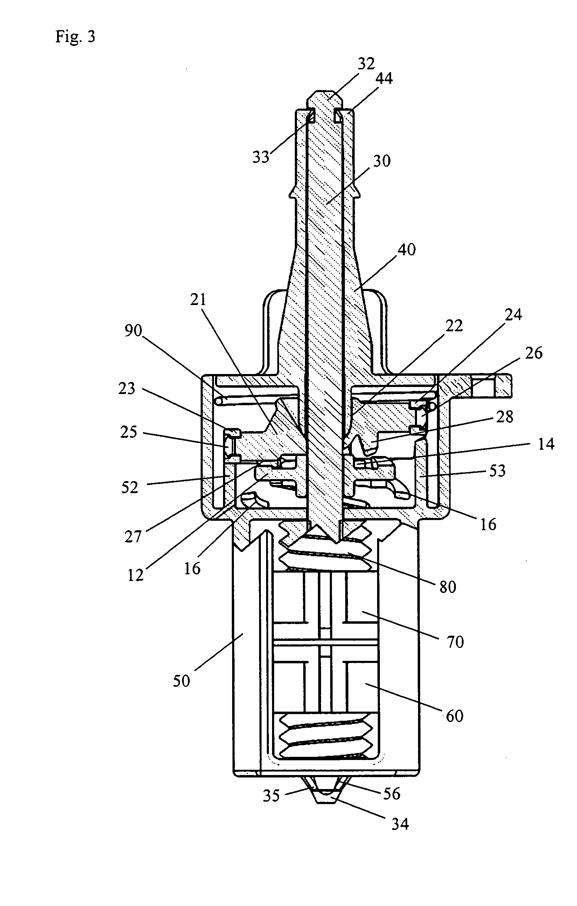

For the assembly of the adjusting mechanism 1, the main shaft 30 comprises at its both ends a cone-shaped end 32, 34, respectively. The second cone-shaped end 34 latches with second latching elements 56 of housing 50, which engage beneath the second cone-shaped end 34 in a recess 35, as shown in figure 3. The second latching elements 56 essentially consist of resilient flaps. Thereby, it is prevented, that the main shaft 30 is released from the housing 50 (in figure 3 to the top). At its other end, the main shaft 30 comprises a first cone-shaped end 32 beneath that also a recess 33 is located. After the assembly, latching elements 44 of driving shaft 40 engage within this recess 33, so that driving shaft 40 is axially fixed but still rotatable with respect to the main shaft 30. Thereby, an assembly of the adjusting mechanism 1 is possible by a simple clipping together of all components. Therefor the assembly is easy, cost-efficient and can be performed without any tools.

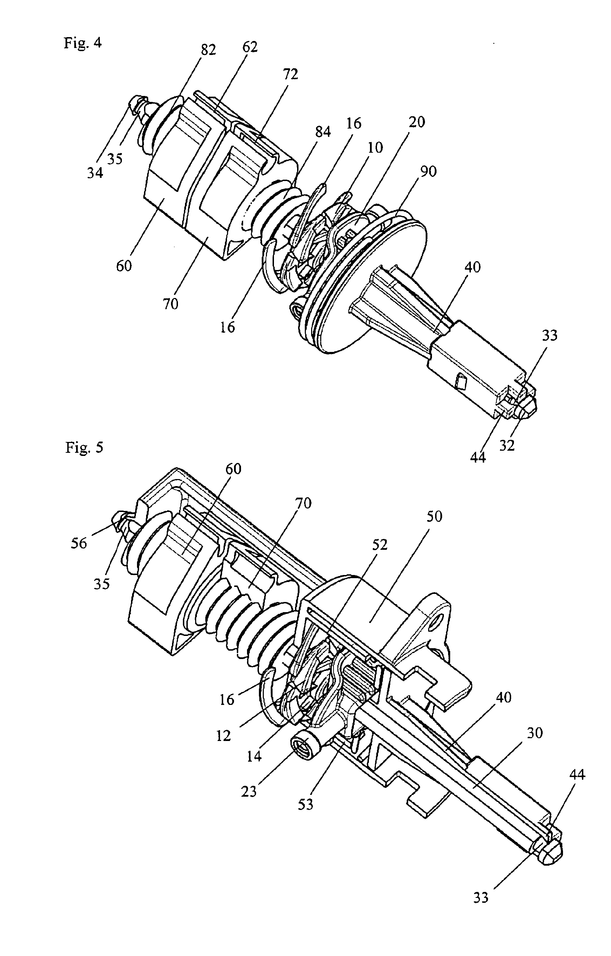

At its under side, the engaging plate 20 comprises integrally formed spring elements 16. As shown in figure 4, these spring elements 16 comprise of single, axially projecting arms, which are relatively thin for achieving the spring effect. The spring elements 16 press the driving plate 10 onto the main shaft 30 in direction of engaging plate 20. Thereby, a freeplay-free latching of the engaging plate 20 with the driving plate 10 is achieved.

The elements of the adjusting mechanism 1 are preferably produced of a plastic material. Particularly preferred a glass-fiber or carbon-fiber reinforced plastic material is used. The torsional spring 90 is preferably produced of a spring steel. The adjusting mechanism 1 is therefore very light-weight and maintenance-free due to the used plastic materials.

### List of reference signs

- 1: adjusting mechanism
- 10: driving plate
- 12: outer set of teeth
- 14: inner set of teeth
- 16: spring elements
- 20: engaging plate
- 21: main body
- 22: pivoting joint
- 23: first roll
- 24: second roll
- 25: first bearing pin
- 26: second bearing pin
- 27: outer engaging tooth
- 28: inner engaging tooth
- 30: main shaft
- 32: first cone-shaped end
- 33: first recess
- 34: second cone-shaped end
- 35: second recess
- 36: flattened side
- 40: driving shaft
- 42: shaft connection
- 44: latching elements
- 46: actuating piece
- 50: housing
- 52: first guiding track
- 52a: high section
- 52b: transition section
- 52c: low section
- 53: second guiding track
- 53a: low section
- 53b: transition section
- 53c: high section
- 54: mounting lugs
- 55: first nose
- 56: second nose
- 57: guiding faces
- 60: first nut
- 62: receptacle for the cable sheath
- 64: guiding faces
- 70: second nut
- 72: receptacle for cable end
- 74: guiding faces
- 80: spindle
- 82: first area of threads
- 84: second area of threads
- 90: torsional spring
- 92: first spring end
- 94: second spring end

## Claims

1. Adjusting mechanism (1) for the actuation of Bowden cables, comprising:
a. a rotatably supported driving plate (10);
b. a rotatably supported engaging plate (20) for transmitting of a rotational motion to the driving plate (10); wherein
c. during the rotation, the engaging plate (20) is additionally pivotable around an axis, which is perpendicularly arranged to the rotational axis of the engaging plate (20), to engage the driving plate (10) with the engaging plate (20).

2. Adjusting mechanism (1) according to claim 1, wherein the engaging plate (20) further comprises at least one first engaging means (27) and at least one second engaging means (28), which are engageable with at least one first (12) and at least one second engaging means (14) of the driving plate (10), depending on the pivoting position of the engaging plate (20).

3. Adjusting mechanism (1) according to one of the claims 1 or 2, wherein the engaging plate (20) is pivotable, caused by the rotational motion of the engaging plate (20).

4. Adjusting mechanism (1) according to claim 3, further comprising at least one guiding track (52, 53), which converts the rotational motion of the engaging plate (20) to the pivoting motion of the engaging plate (20).

5. Adjusting mechanism (1) according to claim 4, further comprising a housing (50), wherein the at least one guiding track (52, 53) is formed within the housing (50).

6. Adjusting mechanism (1) according to one of the claims 1 - 5, wherein the first engaging means (27) of the engaging plate (20) comprises a first engaging tooth (27) and the second engaging means (28) of the engaging plate (20) comprises a second engaging tooth (28); wherein
in radial direction the first engaging means (27) is further outwardly arranged onto the engaging plate (20), compared to the second engaging means (28); and wherein
the first engaging means (27) is arranged onto the engaging plate (20) in opposite to the second engaging means (28), wherein the pivoting axis of the engaging plate (20) runs between the first (27) and the second engaging means (28).

7. Adjusting mechanism (1) according to one of the claims 1 - 6, wherein the first engaging means (12) of the driving plate (10) comprises a plurality of teeth (12), which are sloped in a first tangential direction, wherein the teeth (12) are circularly arranged to form an outer set of teeth (12); and
wherein the second engaging means (14) of the driving plate (10) comprises a plurality of teeth (14), which are sloped in a second tangential direction, wherein the teeth (14) are circularly arranged to form an inner set of teeth (14); wherein
the radius of the outer set of teeth (12) is larger than the radius of the inner set of teeth (14).

8. Adjusting mechanism (1) according to one of the claims 1 - 7, wherein the driving plate (10) further comprises integrally formed spring elements (13) to axially bias the driving plate (10) in direction of the engaging plate (20).

9. Adjusting mechanism (1) according to one of the claims 1 - 8, wherein the adjusting mechanism (1) further comprises a torsional spring (90) to automatically return the engaging plate (20) back to its initial position after the actuation of the adjusting mechanism (1).

10. Adjusting mechanism (1) according to one of the claims 1 - 9, wherein the engaging plate (20) comprises at least one roll (23, 24), which runs onto the at least one guiding track (53, 54), to generate the pivoting motion of the engaging plate (20).

11. Adjusting mechanism (1) according to one of the claims 1 - 10, wherein the main shaft (30) extends through the complete adjusting mechanism (1), to commonly assemble the single components of the adjusting mechanism (1).

12. Adjusting mechanism (1) according to claim 11, wherein the main shaft (30) comprises recesses (33, 35) at both ends, to respectively latch with resilient latching elements (44, 56).

13. Method for the actuation of Bowden cables, comprising the steps:
a. rotating an engaging plate (20) around a rotational axis;
b. pivoting the engaging plate (20) around an axis, running perpendicularly to the rotational axis of the engaging plate (20); wherein
c. the engaging plate (20) engages with a driving plate (10) by the pivoting; and
d. after the engagement, transmitting a rotational motion of the engaging plate (20) to the driving plate (10).

14. Method according to claim 13, wherein either a first engaging means (27) or a second engaging means (28) of the engaging plate (20) selectively engages with the driving plate (10), dependent on the rotational direction of the engaging plate (20).

15. Method according one of the claims 13 or 14, wherein the step of the pivoting of the engaging plate (20) is performed simultaneously with and caused by the step of the rotating of the engaging plate (20).

16. Method according to one of the claims 13 - 15, wherein the pivoting direction of the engaging plate (20) is reversed due to the reversing of the rotational direction of the engaging plate (20).

17. Method according to one of the claims 13 - 16, wherein the step of the pivoting of the engaging plate (20) is only performed during a certain section of the rotational motion of the engaging plate (20).
